# EUROPEAN PATENT SPECIFICATION

(11) **EP 3 012 650 B1**
(45) Date of publication and mention of the grant of the patent: **09.06.2021**
(21) Application number: 13852346.9
(22) Date of filing: 02.09.2013
(51) Int. Cl.: G01S 3/04, H04R 5/02, H04N 5/225

(54) **MOBILE ACOUSTIC SOURCE TRACKING SENSOR AND MANUFACTURING METHOD**
MOBILER SCHALLQUELLENVERFOLGUNGSSENSOR UND HERSTELLUNGSVERFAHREN
CAPTEUR DE POURSUITE DE SOURCE ACOUSTIQUE MOBILE ET PROCÉDÉ DE FABRICATION

(30) Priority: 21.06.2013 KR 20130071285
(43) Date of publication of application: 27.04.2016
(73) Proprietor: SM Instruments Co., Ltd., Yuseong-gu Daejeon 305-510 (KR)
(72) Inventor: KIM, Young Ki, Daejeon 302-121 (KR)
(74) Representative: Ter Meer Steinmeister & Partner
(86) International application number: PCT/KR2013/007874
(87) International publication number: WO 2014/204049

(56) References cited:
- EP-A2- 1 983 316
- WO-A1-2013/024926
- JP-A- 2002 359 767
- KR-A- 20100 128 855
- KR-A- 20110 076 002
- KR-A- 20110 100 533
- KR-B1- 101 213 539
- US-A- 3 361 402

## Description

### BACKGROUND OF THE INVENTION

### Field of the Invention

Exemplary embodiments of the present invention relates to a portable acoustic camera for using MEMS microphones and method of manufacturing the same.

### Description of Related Art

An acoustic camera is an ultramodern measurement apparatus for visualizing sound, and a new technology device which is necessary in various fields such as multimedia information devices, household electrical appliances, automobiles, construction, etc. The applicant of the present invention, SM instruments Inc. and the KAIST are the one that have leading technologies in the acoustic camera for using the existing measurement microphone and have made common products.

Korean Registration patent number No.10-051120 of 'Korean Advanced Institute of Science and Technology' is a method of separating sound field of the separate sound source by using acoustic holograph, as a method of separating sound field of sound source for using acoustic holography, comprises a first step for measuring sound pressure at several points on hologram and for obtaining hologram spectrum matrix which comprises self spectrum of sound pressure at each point and mutual spectrum between other points; a second step of applying the hologram surface spectrum matrix to the acoustic holography method and calculating a sound source surface spectrum matrix which comprises a self spectrum of sound pressure value at each point and a mutual spectrum between other points; a third step of determining as a position of sound source a position where the self spectrum of sound pressure value is a maximum in the sound source surface spectrum matrix, and calculating contribution amount of the determined sound source, and a fourth step of renewing, if there is a remaining spectrum matrix which is a subtract of contribution amount of the determined sound source from the sound source surface spectrum matrix, the remaining spectrum matrix to a new sound source surface spectrum matrix and repeating its performance from the third step. WO-A-2013/024926 discloses an acoustic camera with MEMS microphones. EP-A-1 983 316 discloses a sound camera with camera and microphones positioned on supporting ribs.

### SUMMARY OF THE INVENTION

An object of the present invention is to provide a sound source searching sensor according to claim 1 and a manufacturing method according to claim 10. By using

MEMS microphones in the type of print circuit board, the acoustic camera, its manufacture period and costs are greatly improved.

In addition, an object of the present invention is to provide a portable sound source searching sensor for improving removal of reflection wave by blocking front/rear sound, and producing a new market with the acoustic camera of becoming a popular measurement apparatus. Another object is to provide a portable sound source searching sensor which is easy to use and mounting and easy to moving and fixing.

In addition, the present invention is to provide a portable sound source searching sensor further comprising a handle, without a fixing means, wherein the positioning can be made when a user holds the camera in any place or puts it on any table.

To obtain the above objects, the portable acoustic camera of the present invention comprises the features of claim 1. Such an acoustic camera has a front body 10 in which acoustic sensors of MEMS microphones 20 are arranged to face forward; MEMS microphones 20 of which acoustic sensors are exposed to the front body 10 in a fixed state to the substrate 30; a substrate 30 on which the microphones 20 are mounted; an image photographing unit 40 of which a photographing lens 41 is exposed through a lens hole of the front body 10; and a rear body 50 for surrounding a rear side of the substrate 30 and a rear side of the image photographing unit in a state that the substrate 30 is positioned at a rear side of the front body 10.

### BRIEF DESCRIPTION OF THE DRAWINGS

Fig. 1 is a perspective view of a portable sound source searching sensor of an embodiment of the present invention.
Fig. 2a and 2b are front views of the portable sound source searching sensor of the embodiment of the present invention.
Fig.3 is a rear view of the portable sound source searching sensor of the embodiment of the present invention.
Fig. 4 is a rear view of the portable sound source searching sensor of the embodiment of the present invention, without the rear body.
Fig. 5 is a bottom view of the portable sound source searching sensor of the embodiment of the present invention, without the rear body.
Fig. 6a and 6b are front and rear views of the front body for describing the method of manufacturing the portable sound source searching sensor of the embodiment of the present invention.
Fig. 7a and 7b are front and rear views of the rear body for describing the method of manufacturing the portable sound source searching sensor of the embodiment of the present invention.
Fig. 8a and 8b are views of a rear inner plate for describing the method of manufacturing the portable sound source searching sensor of the embodiment of the present invention.
Fig.9 is a detail view of an image photographing unit and DAB of the embodiment of the present invention.
Fig. 10 is an explosion view of showing a handle.
Fig. 11 is a detail view of a hollow fixing piece of the embodiment of the present invention.
Fig. 12 is a flow chart of describing a method of manufacturing the portable sound source searching sensor according to the embodiment of the present invention.

### DESCRIPTION OF SPECIFIC EMBODIMENTS

The portable acoustic camera of the present invention comprises a front body 10 in which acoustic sensors of MEMS microphones 20 are arranged to face forward; MEMS microphones 20 of which acoustic sensors are exposed to the front body 10 in a fixed state to the substrate 30; a substrate 30 on which the microphones 20 are mounted; an image photographing unit 40 of which a photographing lens 41 is exposed through a lens hole of the front body 10; and a rear body 50 for surrounding a rear side of the substrate 30 and a rear side of the image photographing unit in a state that the substrate 30 is positioned at a rear side of the front body 10.

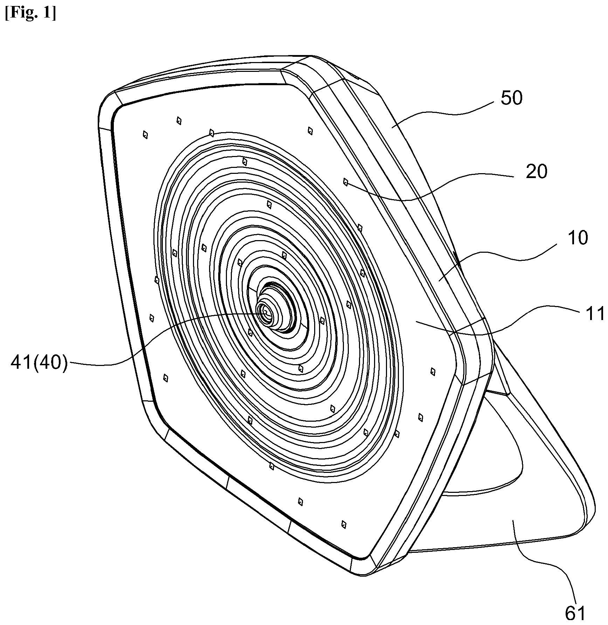

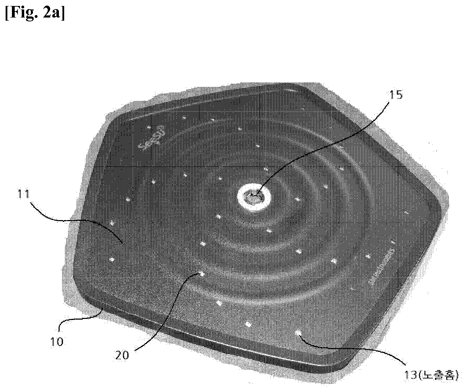

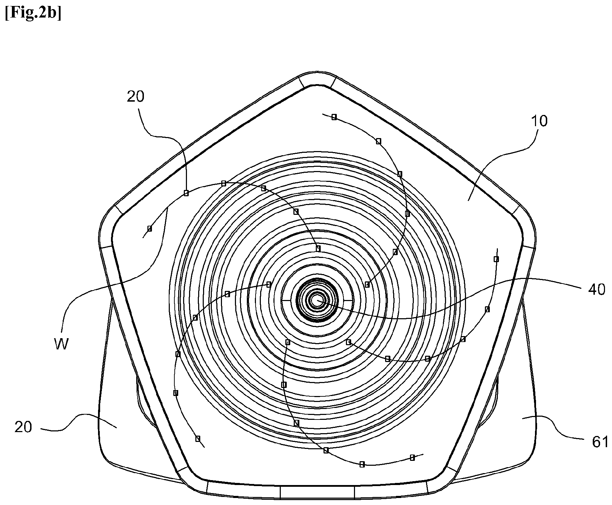

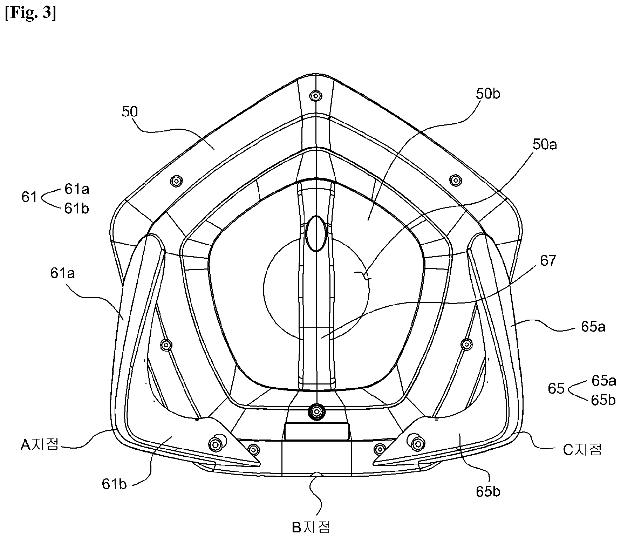

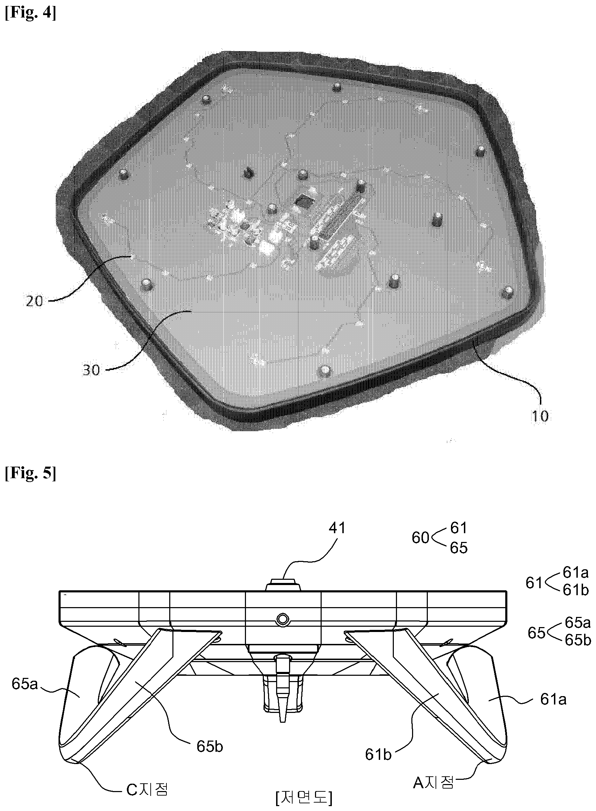

Hereinafter, a portable sound source searching sensor according to an embodiment of the present invention will be described in detail with reference to the accompanying drawings. Fig. 1 is a perspective view of a portable sound source searching sensor of an embodiment of the present invention. Fig. 2a and 2b are front views of the portable sound source searching sensor of the embodiment of the present invention. Fig.3 is a rear view of the portable sound source searching sensor of the embodiment of the present invention. Fig. 4 is a rear view of the portable sound source searching sensor of the embodiment of the present invention, without the rear body. Fig. 5 is a bottom view of the portable sound source searching sensor of the embodiment of the present invention, without the rear body.

The term "exposition" in this invention does not mean projection, and it means existence of electric or physical passage through which air, sound, wave or light can move in. In this invention, the MEMS microphone is made by changing the existing microphone in a form of electronic chip in order to be used in mobile phones, etc., The term "MEMS microphone" may include all the general MEMS microphones, for example the capacitor type silicon MEMS microphone and the capacitive microphone, which is used in this invention. As the mobile phone technology develops, it has a great performance for the present, which is second to the microphone for measurement.

As shown in Figs. 1-5, a portable sound source searching sensor of an embodiment of the present invention comprises a front body 10, MEMS microphones 20, a substrate 30, an image photographing unit 40 and a rear body 50.

As shown in Figs.1-5, in the front body 10, acoustic sensors of MEMS microphones 20 are arranged to face forward. The acoustic sensor of MEMS microphone is exposed in the front body 10 in a fixed state to the substrate 30.

As shown in Figs.1-5, on the substrate 30 are mounted the MEMS microphones 20. A photographing lens 41 of the image photographing unit 40 is exposed through a lens hole of the front body 10. The image photographing unit 40 may further comprise existing electronics (image collector, signal transformer or image signal processor) which transform image signals from the photographing lens to electronic signals.

As shown in Figs. 1-5, a rear body 50 surrounds a rear side of the substrate 30 and a rear side of the image photographing unit 40 in a state that the substrate 30 is positioned at a rear side of the front body 10. The front body 10 and the rear body 50 have advantageous effects in the forming and weight aspect when plastic resin is used.

In the portable sound source searching sensor according to the embodiment of the present invention, the MEMS microphones 20 has 2-30 branches W which extend radially on the straight or in a spiral shape, and the 2-50 MEMS microphones 20 may be arranged in the branch W.

The portable sound source searching sensor according to the embodiment of the present invention, as shown in figures, preferably further comprises handle 60 which is projected backward in a fixed state to an edge of the front body 10 or the rear body 50. The handle 60 preferably comprises a pair of left and right handle 61,65 which are formed symmetrically.

In the portable sound source searching sensor of the embodiment of the present invention, as shown in figures, the left, right handle 61,65 preferably comprises a first, second upper lengthwise bar 61a,65a of which upper ends are fixed to the rear body 50 and lower ends are coupled to rear ends of the first, second lower crosswise bar 61a, 65a; and the first, second lower crosswise bar 61b, 65b of which front ends are fixed to the rear body 50 and the rear ends are coupled to the lower ends of the first, second upper lengthwise bar 61a, 65a.

In the portable sound source searching sensor of the embodiment of the present invention, as shown in figure 3, a point B of a lower outline of the front body 10 or the rear body 50, or a lower outline, a lower support point A of the left handle 61 and a lower support point C of the right handle 65 form a plane so that an acoustic camera can be supported by a structure on a plane.

The acoustic camera of the embodiment of the present invention, as shown in figures, further comprises a central handle 67 which extends upward and downward between the left, right handle 61, 65. As shown in Fig.3, an incline is formed in a back center of the rear body 50 and a bottom groove 50a is formed concave. It is preferable that an inner side of the central handle 67 faces the bottom groove 50a.

In the acoustic camera of the embodiment of the present invention, as shown in figures, the front body 10 and the rear body 50 are made by plastic injection, and the left, right handle 61,65 and the central handle 67 are assembled to the rear body 50 by a coupling means. The front body 10 includes a front plate 11 which forms a plane, and the front plate 11 and the substrate 30 are preferably arranged parallel.

In the acoustic camera of the embodiment of the present invention, as shown in figures, the photographing lens 41 is exposed through a lens hole 15 which is formed in a central deep part of the front plate 11. The acoustic sensors of the MEMS microphones 20 are preferably exposed through the plural of sensing holes 13 which are formed in the front plate 11.

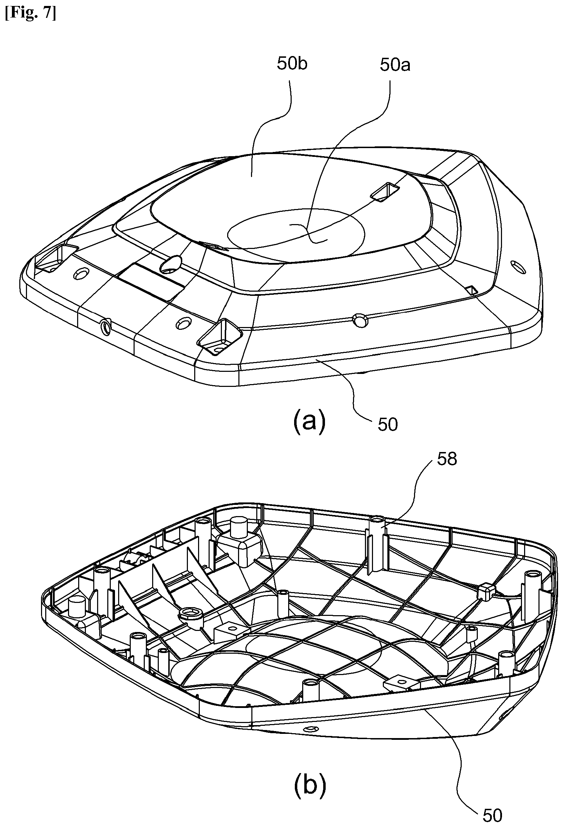

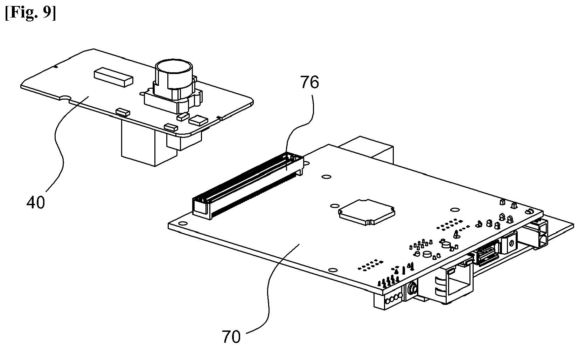

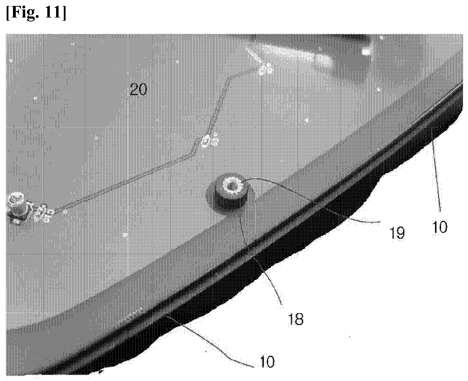

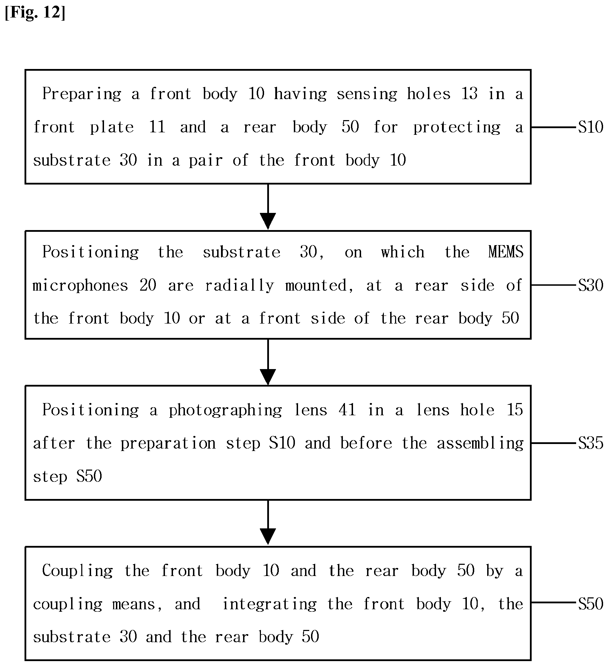

As shown in Fig.1-Fig.12, in a step of positioning the substrate S30, the substrate 30, on which the MEMS microphones 20 are radially mounted, is positioned at a rear side of the front body 10 or at a front side of the rear body 50.

Subsequently, in an assembling step S50, the front body 10 and the rear body 50 are coupled by a coupling means, and the front body 10, the substrate 30 and the rear body 50 are integrated.

As shown in Fig.1-Fig.12, the method of manufacturing the portable sound source searching sensor of the present invention, after a preparation step S10 and before the assembling step S50 may further comprise a step of positioning photographing lens S 35 where a photographing lens 41 is positioned in a lens hole 15 after the preparation step S10 and before the assembling step S50.

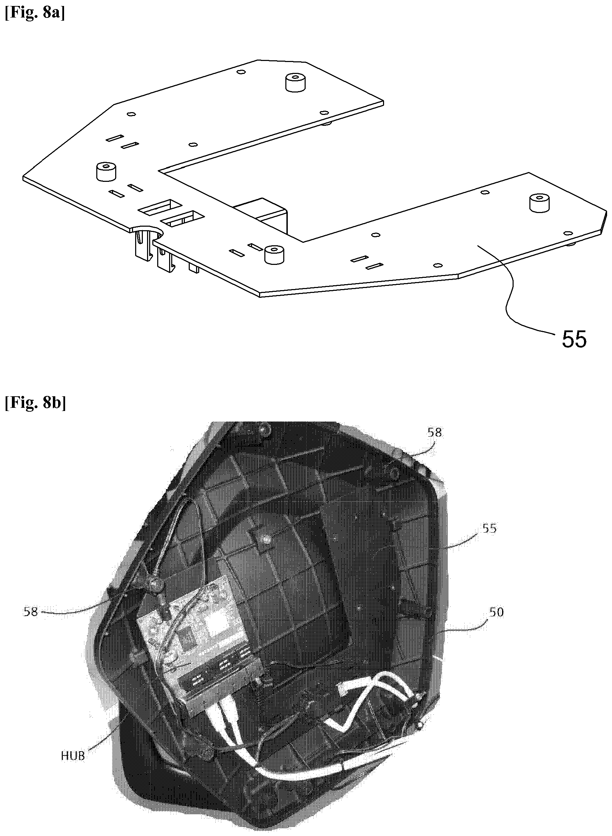

As shown in Fig.1-Fig.12 (specially, Fig.8), in the method of manufacturing the portable sound source searching sensor of the present invention, a front plane of the rear body 50 is curved, and a flat rear inner plate 55 is coupled thereto.

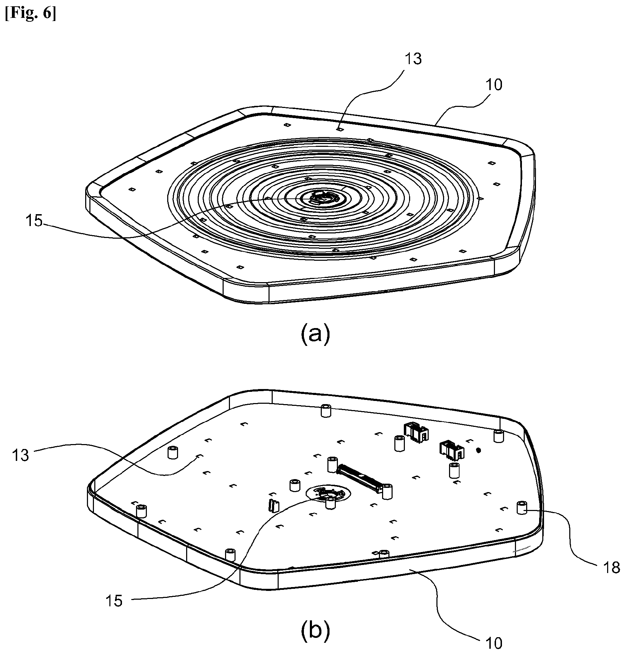

As shown in Fig.1-Fig.12 (specially, Fig.6, Fig.7 and Fig 11), in the method of manufacturing the portable sound source searching sensor of the embodiment, first hollow fixing pieces 18 are projected at a rear side of the front body 10, and second fixing pieces 58 are projected at a front side of the rear body 50, a coupling means tighten the first hollow fixing pieces 18 and the second hollow fixing pieces 58 to integrate the front body 10 and the rear body 50.

As shown in Fig.1-Fig.12 (specially, Fig.6, Fig.7 and Fig 11), in the method of manufacturing the portable sound source searching sensor of the embodiment, a metal piece 19, which a spiral is formed on an inner circumferential surface is pressed and fixed in a hollow of the first hollow fixing pieces 18, and the coupling means is a bolt or screw which penetrate the second hollow fixing pieces 58.

As shown in Fig.1-Fig.12, the method of manufacturing the portable sound source searching sensor of the embodiment further comprises a step S40 of positioning the image photographing unit 40 which processes image signal from the photographing lens 41 at a rear of the substrate 30 after the step of positioning the photographing lens S35 before the step of assembling S50; a step of electronically connecting S45 the substrate 30 and a data acquisition board 70 for acquiring acoustic signal from the MEMS microphones 20 to pass it to a calculating unit.

The method of manufacturing the portable sound source searching sensor of the embodiment further comprises a step of mounting a handle 60 which is projected backward of the rear body 50, wherein the handle 60 is assembled from the start to a rear of the rear body 50 in the preparation step S10, or the handle 60 is coupled to edge of the front body 10 or a rear side of the rear body 50 after the assembling step S50.

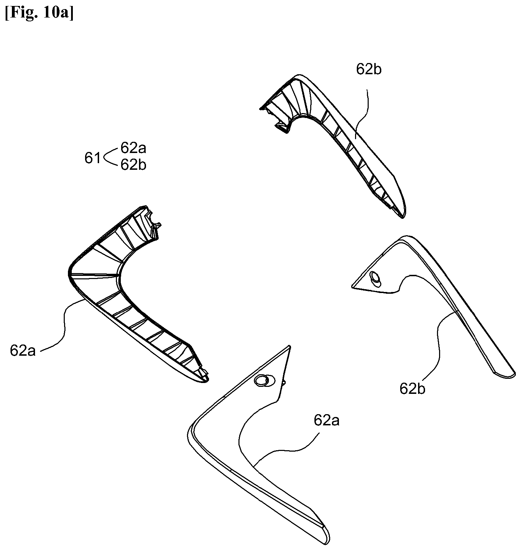

As shown in Fig.10, the handle 61,65 is injection molded and formed to two pieces 62a, 62b and thereafter two pieces are bonding-coupled in a pair, and the coupling part is grinded to have smooth appearance as shown in Fig. 10.

As describing above, the present invention provides a sound source searching sensor for improving greatly the existing acoustic camera by MEMS microphones, and for improving manufacture period and costs by making MEMS microphones in the type of print circuit board. In addition, the present invention provides a portable sound source searching sensor for improving removal of reflection wave by blocking front/rear sound, and producing a new market with the acoustic camera of becoming a popular measurement apparatus. In addition, the present invention provides a portable sound source searching sensor which is easy to use and mounting and easy to moving and fixing. In addition, the present invention provides a portable sound source searching sensor comprising a handle, without a fixing means, wherein the positioning can be made when a user holds the camera in any place or put on any table.

While the present invention has been described with respect to the specific embodiments, it will be apparent to those skilled in the art that various changes and modifications may be made without departing from the scope of the invention as defined in the following claims.

Reference numbers in following claims is only for helping understanding of the invention, and the reference numbers does not affect interpretation of scope of claims, and claim scope should not be interpreted in a narrow sense by the reference numbers.

## Claims

1. A portable sound source searching sensor comprising:
a front body (10) in which acoustic sensors of MEMS microphones (20) are arranged to face forward, wherein the front body (10) includes a front plate (11) which forms a plane;
MEMS microphones (20) of which acoustic sensors are exposed to the front body (10) in a fixed state to the substrate (30);
a substrate (30) on which the microphones (20) are mounted;
an image photographing unit (40) of which a photographing lens (41) is exposed through a lens hole (15) of the front body (10); and
a rear body (50) for surrounding a rear side of the substrate (30) and a rear side of the image photographing unit (40) in a state that the substrate (30) is positioned at a rear side of the front body (10),
wherein the rear body (50) includes a concavely formed bottom groove (50a) at a back center of the rear body (50), wherein the photographing lens (41) is exposed through the lens hole (15) which is formed in a central deep part of the front plate (11), and wherein the acoustic sensors of the MEMS microphones (20) are exposed through a plurality of sensing holes (13) which are formed in the front plate (11),
wherein an inner side of a central handle (67) faces the bottom groove (50a).

2. The sensor in claim 1, wherein the MEMS microphones (20) has 2-30 branches (W) which extend radially on the straight or in a curved or spiral shape, and 2-50 of the MEMS microphones (20) are arranged in the branch (W).

3. The sensor of claim 1, further comprising a handle (60) which is projected backward in a fixed state to an edge of the front body (10) or the rear body (50).

4. The sensor of claim 2, wherein the handle (60) comprises a pair of left and right handle (61, 65) which are formed symmetrically.

5. The sensor of claim 4, wherein the left, right handle (61, 65) comprises:
a first, second upper lengthwise bar (61a, 65a) of which upper ends are fixed to the rear body (50), and lower ends are coupled to rear ends of the first, second lower crosswise bar (61a, 65a); and
the first, second lower crosswise bar (61b, 65b) of which front ends are fixed to the rear body (50), and the rear ends are coupled to the lower ends of the first, second upper lengthwise bar (61a, 65a).

6. The sensor of claim 5, wherein a point (A) of a lower outline of the front body (10) or the rear body (50), or a lower outline; a lower support point (B) of the left handle (61); and a lower support point (C) of the right handle (65) form a plane so that a sound source searching sensor can be supported by a structure on the plane.

7. The sensor of claim 1, wherein the central handle (67) extends up- and downward between the left, right handle (61, 65).

8. The sensor of one of claims 3-7, wherein the front body (10) and the rear body (50) are made by plastic injection, and the left, right handle (61, 65) and the central handle (67) are assembled to the rear body (50) by a coupling means.

9. The sensor of claim 1, wherein the front plate (11) and the substrate (30) are arranged parallel.

10. A method of manufacturing a portable sound source searching sensor comprising:
a step (S10) of preparing a front body (10) having sensing holes (13) in a front plate (11) and a rear body (50) for protecting a substrate (30) in a pair of the front body (10);
a step (S30) of positioning the substrate (30), on which MEMS microphones (20) are radially mounted, at a rear side of the front body (10) or at a front side of the rear body (50);
a step (S35) of positioning a photographing lens (41) in a lens hole (15) of the front body (10); and
an assembling step (S50) of coupling the front body (10) and the rear body (50) by a coupling means, and of integrating the front body (10), the substrate (30) and the rear body (50),
wherein the rear body (50) includes a concavely formed bottom groove (50a) at a back center of the rear body (50), wherein the photographing lens (41) is exposed through the lens hole (15) which is formed in a central deep part of the front plate (11), and wherein acoustic sensors of the MEMS microphones (20) are exposed through the sensing holes (13),
wherein an inner side of a central handle (67) faces the bottom groove (50a).

11. The method of claim 10, wherein a front surface of the rear body (50) is curved, and a flat rear inner plate (55) is coupled thereto.

12. The method of claim 10, wherein first hollow fixing pieces (18) are projected at a rear side of the front body (10), and second hollow fixing pieces (58) are projected at a front side of the rear body (50), and in the assembling step (S50), a coupling means tightens the first hollow fixing pieces (18) and the second hollow fixing pieces (58) to integrate the front body (10) and the rear body (50).

## Patentansprüche

1. Tragbarer Tonquellensuchsensor, der Folgendes umfasst:
einen vorderen Körper (10), in dem akustische Sensoren von MEMS-Mikrofonen (20) derart angeordnet sind, dass sie nach vorne orientiert sind, wobei der vordere Körper (10) eine Stirnplatte (11) enthält, die eine Ebene bildet;
MEMS-Mikrofone (20), wovon akustische Sensoren in einem am Substrat (30) befestigten Zustand zum vorderen Körper (10) freiliegen;
ein Substrat (30), auf dem die Mikrofone (20) angebracht sind;
eine Bildfotografiereinheit (40), wobei eine Fotolinse (41) durch ein Linsenloch (15) des vorderen Körpers (10) freiliegt; und
einen rückwärtigen Körper (50) zum Umgeben einer Rückseite des Substrats (30) und einer Rückseite der Bildfotografiereinheit (40) in einem Zustand, in dem das Substrat (30) an einer Rückseite des vorderen Körpers (10) angeordnet ist,
wobei der rückwärtige Körper (50) an einer Rückseitenmitte des rückwärtigen Körpers (50) eine konkav ausgebildete Bodenfuge (50a) enthält, wobei die Fotolinse (41) durch das Linsenloch (15) freiliegt, das in einer mittigen, tiefen Komponente der Stirnplatte (11) gebildet ist, und wobei die akustischen Sensoren der MEMS-Mikrofone (20) durch mehrere Erfassungslöcher (13) freiliegen, die in der Stirnplatte (11) gebildet sind,
wobei eine Innenseite eines mittigen Griffs (67) der Bodenfuge (50a) zugewandt ist.

2. Sensor nach Anspruch 1, wobei die MEMS-Mikrofone (20) 2-30 Zweige (W) aufweisen, die sich radial auf einer Geraden oder in einer gekrümmten oder spiralförmigen Form erstrecken, und 2-50 der MEMS-Mikrofone (20) in dem Zweig (W) angeordnet sind.

3. Sensor nach Anspruch 1, der ferner einen Griff (60) umfasst, der in einem an einer Kante des vorderen Körpers (10) oder des rückwärtigen Körpers (50) befestigten Zustand nach hinten vorsteht.

4. Sensor nach Anspruch 2, wobei der Griff (60) ein Paar eines linken und eines rechten Griffs (61, 65) umfasst, die symmetrisch ausgebildet sind.

5. Sensor nach Anspruch 4, wobei der linke und der rechte Griff (61, 65) jeweils Folgendes umfassen:
einen ersten, zweiten oberen, längs gerichteten Stab (61a, 65a), dessen obere Enden an rückwärtigen Körper (50) befestigt sind und dessen untere Enden mit den rückwärtigen Enden des ersten, zweiten unteren, quer gerichteten Stabs (61a, 65a) gekoppelt sind; und
den ersten, zweiten unteren, quer gerichteten Stab (61b, 65b), dessen vordere Enden am rückwärtigen Körper (50) befestigt sind und dessen rückwärtige Enden mit den unteren Enden des ersten, zweiten oberen, längs gerichteten Stabs (61a, 65a) gekoppelt sind.

6. Sensor nach Anspruch 5, wobei ein Punkt (A) eines unteren Umrisses des vorderen Körpers (10) oder des rückwärtigen Körpers (50), oder ein unterer Umriss; ein unterer Trägerpunkt (B) des linken Griffs (61) und ein unterer Trägerpunkt (C) des rechten Griffs (65) eine Ebene bilden, derart, dass ein Tonquellensuchsensor durch eine Struktur auf der Ebene getragen werden kann.

7. Sensor nach Anspruch 1, wobei sich der mittige Griff (67) zwischen dem linken und dem rechten Griff (61, 65) nach oben und nach unten erstreckt.

8. Sensor nach einem der Ansprüche 3-7, wobei der vordere Körper (10) und der rückwärtige Körper (50) durch Kunststoffspritzguss hergestellt werden und der linke und rechte Griff (61, 65) und der mittige Griff (67) durch ein Kopplungsmittel am rückwärtigen Körper (50) montiert werden.

9. Sensor nach Anspruch 1, wobei die Stirnplatte (11) und das Substrat (30) parallel angeordnet sind.

10. Verfahren zum Herstellen eines tragbaren Tonquellensuchsensors, das Folgendes umfasst:
einen Schritt (S10) des Vorbereitens eines vorderen Körpers (10) mit Erfassungslöchern (13) in einer Stirnplatte (11) und eines rückwärtigen Körpers (50) zum Schützen eines Substrats (30) als Gegenstück zum vorderen Körper (10);
einen Schritt (S30) des Anordnens des Substrats (30), auf dem MEMS-Mikrofone (20) radial angebracht sind, an einer Rückseite des vorderen Körpers (10) oder an einer Vorderseite des rückwärtigen Körpers (50);
einen Schritt (S35) des Anordnens einer Fotolinse (41) in einem Linsenloch des vorderen Körpers (10); und
einen Montageschritt (S50) des Koppelns des vorderen Körpers (10) und des rückwärtigen Körpers (50) durch ein Kopplungsmittel und des Integrierens des vorderen Körpers (10), des Substrats (30) und des rückwärtigen Körpers (50),
wobei der rückwärtige Körper (50) an einer Rückseitenmitte des rückwärtigen Körpers (50) eine konkav ausgebildete Bodenfuge (50a) enthält, wobei die Fotolinse (41) durch das Linsenloch (15) freiliegt, das in einer mittigen, tiefen Komponente der Stirnplatte (11) gebildet ist, und wobei akustische Sensoren der MEMS-Mikrofone (20) durch die Erfassungslöcher (13) freiliegen,
wobei eine Innenseite eines mittigen Griffs (67) der Bodenfuge (50a) zugewandt ist.

11. Verfahren nach Anspruch 10, wobei eine vordere Fläche des rückwärtigen Körpers (50) gekrümmt ist und eine ebene, rückwärtige Innenplatte (55) damit gekoppelt ist.

12. Verfahren nach Anspruch 10, wobei erste hohle Befestigungsstücke (18) an einer Rückseite des vorderen Körpers (10) vorstehen und zweite hohle Befestigungsstücke (58) an einer Vorderseite des rückwärtigen Körpers (50) vorstehen und in dem Montageschritt (S50) ein Kopplungsmittel die ersten hohlen Befestigungsstücke (18) und die zweiten hohlen Befestigungsstücke (58) festzieht, um den vorderen Körper (10) und den rückwärtigen Körper (50) zu integrieren.

## Revendications

1. Capteur de recherche de source sonore portatif comportant :
un corps avant (10) dans lequel des capteurs acoustiques de microphones MEMS (20) sont agencés pour être dirigés vers l'avant, dans lequel le corps avant (10) inclut une plaque avant (11) qui forme un plan ;
des microphones MEMS (20) dont les capteurs acoustiques sont exposés au corps avant (10) dans un état fixé au substrat (30) ;
un substrat (30) sur lequel les microphones (20) sont montés ;
une unité de photographie d'image (40) dont un objectif photographique (41) est exposé à travers un trou d'objectif (15) du corps avant (10) ; et
un corps arrière (50) pour entourer un côté arrière du substrat (30) et un côté arrière de l'unité photographique d'image (40) dans un état où le substrat (30) est positionné sur un côté arrière du corps avant (10),
dans lequel le corps arrière (50) inclut une gorge de fond formée de manière concave (50a) sur un centre arrière du corps arrière (50), dans lequel l'objectif photographique (41) est exposé à travers le trou d'objectif (15) qui est formé dans une partie centrale profonde de la plaque avant (11), et dans lequel les capteurs acoustiques des microphones MEMS (20) sont exposés à travers une pluralité de trous de détection (13) qui sont formés dans la plaque avant (11),
dans lequel un côté intérieur d'une poignée centrale (67) est dirigé vers la gorge de fond (50a).

2. Capteur selon la revendication 1, dans lequel les microphones MEMS (20) ont 2 à 30 branches (W) qui s'étendent radialement sur la droite ou avec une forme incurvée ou en spirale, et 2 à 50 des microphones MEMS (20) sont agencés dans la branche (W).

3. Capteur selon la revendication 1, comportant en outre une poignée (60) qui fait saillie vers l'arrière dans un état fixé à un bord du corps avant (10) ou du corps arrière (50).

4. Capteur selon la revendication 2, dans lequel la poignée (60) comporte une paire de poignées gauche et droite (61, 65) qui sont formées symétriquement.

5. Capteur selon la revendication 4, dans lequel la poignée gauche, droite (61, 65) comporte :
une première, seconde barre longitudinale supérieure (61a, 65a) dont des extrémités supérieures sont fixées au corps arrière (50), et des extrémités inférieures sont couplées à des extrémités arrière de la première, seconde barre transversale inférieure (61a, 65a) ; et
la première, seconde barre transversale inférieure (61b, 65b) dont des extrémités avant sont fixées au corps arrière (50), et les extrémités arrière sont couplées aux extrémités inférieures de la première, seconde barre longitudinale supérieure (61a, 65a).

6. Capteur selon la revendication 5, dans lequel un point (A) d'un contour extérieur du corps avant (10) ou du corps arrière (50), ou un contour inférieur ; un point de support inférieur (B) de la poignée gauche (61) ; et un point de support inférieur (C) de la poignée droite (65) forment un plan de sorte qu'un capteur de recherche de source sonore peut être supporté par une structure sur le plan.

7. Capteur selon la revendication 1, dans lequel la poignée centrale (67) s'étend vers le haut et vers le bas entre la poignée gauche, droite (61, 65).

8. Capteur selon l'une des revendications 3 à 7, dans lequel le corps avant (10) et le corps arrière (50) sont fabriqués par injection de matière plastique, et la poignée gauche, droite (61, 65) et la poignée centrale (67) sont assemblées au corps arrière (50) par des moyens de couplage.

9. Capteur selon la revendication 1, dans lequel la plaque avant (11) et le substrat (30) sont agencés parallèlement.

10. Procédé de fabrication d'un capteur de recherche de source sonore portatif comportant :
une étape (S10) consistant à préparer un corps avant (10) ayant des trous de détection (13) dans une plaque avant (11) et un corps arrière (50) pour protéger un substrat (30) dans une paire du corps avant (10) ;
une étape (S30) consistant à positionner le substrat (30), sur lequel des microphones MEMS (20) sont montés radialement, sur un côté arrière du corps avant (10) ou sur un côté avant du corps arrière (50) ;
une étape (S35) consistant à positionner un objectif photographique (41) dans un trou d'objectif (15) du corps avant (10) ; et
une étape d'assemblage (S50) consistant à coupler le corps avant (10) et le corps arrière (50) par des moyens de couplage, et à intégrer le corps avant (10), le substrat (30) et le corps arrière (50),
dans lequel le corps arrière (50) inclut une gorge de fond formée de manière concave (50a) sur un centre arrière du corps arrière (50), dans lequel l'objectif photographique (41) est exposé à travers le trou d'objectif (15) qui est formé dans une partie centrale profonde de la plaque avant (11), et dans lequel des capteurs acoustiques des microphones MEMS (20) sont exposés à travers les trous de détection (13),
dans lequel un côté intérieur d'une poignée centrale (67) est dirigé vers la gorge de fond (50a).

11. Procédé selon la revendication 10, dans lequel une surface avant du corps arrière (50) est incurvée, et une plaque intérieure arrière plate (55) est couplée à celle-ci.

12. Procédé selon la revendication 10, dans lequel des premières pièces de fixation creuses (18) font saillie sur un côté arrière du corps avant (10), et des secondes pièces de fixation creuses (58) font saillie sur un côté avant du corps arrière (50), et à l'étape d'assemblage (S50), des moyens de couplage serrent les premières pièces de fixation creuses (18) et les secondes pièces de fixation creuses (58) pour intégrer le corps avant (10) et le corps arrière (50).
